# EUROPÄISCHE PATENTANMELDUNG

(11) **EP 3 401 030 A2**
(43) Veröffentlichungstag der Anmeldung: **14.11.2018**
(21) Anmeldenummer: 18160267.3
(22) Anmeldetag: 06.03.2018
(51) Int. Cl.: B21C 47/00, B65H 23/02, B65H 23/188

(54) **ANLAGE UND VERFAHREN ZUM LÄNGSTEILEN EINES BANDES**

(30) Priorität: 19.04.2017 DE 102017108306
(71) Anmelder: BWG BERGWERK- UND WALZWERK-MASCHINENBAU GMBH, 47051 Duisburg (DE)
(72) Erfinder: Noé, Andreas, 47647 Kerken (DE); Kottig, Günter, 48599 Gronau (DE); Warm, Richard, 46509 Xanten (DE); Kalbfleisch, Wolfgang, 46519 Alpen (DE)
(74) Vertreter: Andrejewski - Honke Patent- und Rechtsanwälte GbR

(57) **Zusammenfassung**

Die Erfindung betrifft eine Anlage zum Längsteilen eines Bandes (1), insbesondere Metallbandes, mit
- einer Längsteileinrichtung (2) zum Aufteilen des Bandes (1) in zumindest einen ersten Bandstreifen (1a) und einen zweiten Bandstreifen (1b),
- einer der Längsteileinrichtung (2) nachgeordneten ersten Umlenkrolle (3a) zum Umlenken des ersten Bandstreifens (1a) und einer der Längsteileinrichtung (2) nachgeordneten zweiten Umlenkrolle (3b) zum Umlenken des zweiten Bandstreifens (1b),
- zumindest einer der ersten Umlenkrolle (3a) nachgeordneten ersten Steuerrolleneinrichtung (5a) mit zumindest einer ersten Steuerrolle (6a), die zum Beabstanden des ersten Bandstreifens (1a) von dem zweiten Bandstreifen (1b) um eine Schwenkachse (8a) verschwenkbar ist,
- und einer Aufwickeleinrichtung (15), mit welcher die beiden beabstandeten Bandstreifen (1a, 1b) gemeinsam aufwickelbar sind,

Die Anlage ist **dadurch gekennzeichnet**, dass zumindest einer Steuerrolle (6a) eine gegen die Steuerrolle (6a) anstellbare erste Andrückrolle zum Klemmen des Bandes zugeordnet ist.

Zu veröffentlichen mit Fig. 1.

## Beschreibung

Die Erfindung betrifft eine Anlage zum Längsteilen (und Aufwickeln) eines Bandes, insbesondere Metallbandes, mit
- einer Längsteileinrichtung (z. B. Längsteilschere bzw. Spaltschere) zum Aufteilen des Bandes in zumindest einen ersten Bandstreifen und einen zweiten Bandstreifen,
- einer der Längsteileinrichtung nachgeordneten ersten Umlenkrolle zum Umlenken des ersten Bandstreifens und einer der Längsteileinrichtung nachgeordneten zweiten Umlenkrolle zum Umlenken des zweiten Bandstreifens,
- zumindest einer der ersten Umlenkrolle nachgeordneten ersten Steuerrolleneinrichtung mit zumindest einer ersten Steuerrolle, die zum Beabstanden des ersten Bandstreifens in der Bandlaufebene von dem zweiten Bandstreifen um eine Schwenkachse verschwenkbar ist,
- und einer Aufwickeleinrichtung, mit welcher die beiden beabstandeten Bandstreifen gemeinsam (mit vorgegebenem Abstand) aufwickelbar sind.

Band meint im Rahmen der Erfindung insbesondere ein Metallband, z. B. ein Band aus Stahl oder Aluminium. Bevorzugt betrifft die Erfindung die Behandlung von Bändern aus Aluminium oder einer Aluminiumlegierung. Die Dicke des Bandes, z. B. Metallbandes, kann z. B. 0,5 mm bis 4 mm betragen. Die Erfindung umfasst grundsätzlich aber auch das Längsteilen von Bändern aus anderem Material, z. B. Papier, Kunststoff oder dergleichen. Das Längsteilen selbst erfolgt mit einer Längsteileinrichtung (z. B. Längsteilschere/Spaltschere), die in der Regel mit einem Scherprozess arbeitet, z. B. mit Kreismessern, ähnlich dem Besäumen von Bandkanten. So werden Bänder, insbesondere Metallbänder, häufig vor dem Aufwickeln längsgeteilt (und gegebenenfalls besäumt), um Bandstreifen mit definierter Bandbreite zu erzeugen. Auf diese Weise sollen sich Bandanlagen optimal ausnutzen lassen, da in wirtschaftlicher Weise zunächst breite Bänder hergestellt und bearbeitet und dann längsgeteilt werden. So kann z. B. ein Stahlband mit einer bestimmten Breite (z. B. 2050 mm) gewalzt, gebeizt, verzinkt und lackiert werden. Zum Schluss kann es in zwei oder mehr Bandstreifen längsgeteilt werden, und zwar bei gleichzeitiger Endbesäumung, z. B. in zwei Bandstreifen mit einer Breite von jeweils 1000 mm und mit zwei abgetrennten Saumstreifen mit einer Breite von jeweils 25 mm. Eine solche Vorgehensweise ist deutlich wirtschaftlicher als die Herstellung eines Bandes mit einer Breite von 1000 mm durch Walzen, Beizen, Verzinken und Lackieren.

Bevorzugt betrifft die Erfindung das Längsteilen eines Bandes in zwei oder maximal drei Bandstreifen, besonders bevorzugt ein mittiges Längsteilen, so dass zwei Bandstreifen identischer Breite hergestellt werden. Optional betrifft die Erfindung aber auch das außermittige Längsteilen. Jedenfalls werden die Bandstreifen bzw. das längsgeteilte Band anschließend mit einer Aufwickeleinrichtung aufgewickelt, z. B. auf einen (gemeinsamen) Aufwickelhaspel, und zwar bevorzugt ohne Schlingengrube, also in strammer Linie.

Ein Problem bereitet beim bzw. nach dem Längsteilen der Bänder das Separieren der einzelnen Bandstreifen, die nach der Längsteilung und im Zuge des Aufwickelns mit ihren benachbarten Längskanten aneinander reiben können, so dass Kantenbeschädigungen zu befürchten sind. Es besteht daher grundsätzlich das Bedürfnis, zum korrekten Anwickeln ohne Beschädigungen der Bandkanten die Bandstreifen mit einem gewissen Abstand auf dem Aufwickelhaspel bzw. dem gleichen Haspeldorn aufzuwickeln. Der Abstand zwischen den aufgewickelten Coils auf dem Haspeldorn soll dabei zumindest 2 mm oder zumindest 3 mm, besonders bevorzugt 5 mm bis 10 mm betragen.

Zur Vermeidung von Kantenbeschädigungen ist es aus der Praxis bekannt, beim Längsteilen zugleich einen Saumstreifen zwischen den beiden Bandstreifen herauszuschneiden, wobei dieser Saumstreifen dann jedoch - ähnlich wie beim Besäumen - aufwendig als Schrott entsorgt werden muss. Nachteilig ist darüber hinaus der Ausbringungs- bzw. Materialverlust. Alternativ wurde daher bereits der Einsatz von gebogenen Umlenkrollen vorgeschlagen, die als Breitstreckwalzen wirken. Diese bewirken beim Wickelprozess unter Bandzug durch ihre "Bananenkontur", dass die beiden Bandstreifen um einen gewissen Weg aus der Mitte zum Rand hin verlaufen. Nachteilig ist dabei, dass signifikante Zugspannungen bei niedrigfesten Bandmaterialien zu einer Verschlechterung der Bandplanheit führen können. Außerdem wirken solche Breitstreckwalzen nur unter einem Aufwickel-Bandzug, also erst nach dem Einfädeln.

Um die beschriebenen Nachteile zu überwinden wurde für das Separieren von Bandstreifen außerdem der Einsatz von verschwenkbaren Steuerrollen beschrieben. So ist aus der DE 103 31 023 A1 eine gattungsgemäße Anlage zum Längsteilen (und Aufwickeln) eines Bandes bekannt. Der Spaltschere ist zumindest eine erste Umlenkrolle zum Umlenken zumindest eines der Bandstreifen nachgeordnet und der Umlenkrolle ist in vorgegebenen Abständen zumindest eine erste Steuerrolle zum seitlichen Auslenken des umgelenkten Bandstreifens und eine zweite Steuerrolle zum Einlenken des ausgelenkten Bandstreifens in Bandlaufebene mit in vertikaler Projektion seitlichen Versatz zu dem oder den durchlaufenden Bandstreifen nachgeordnet. Der zweiten Steuerrolle ist eine zweite Umlenkrolle zum Umlenken des seitlich versetzten Bandstreifens unter Beibehaltung des Versatzes in die gleiche Bandlaufebene wie der durchlaufende Bandstreifen mit vorgegebenen Abstand nachgeordnet.

Ähnliche Anlagen zum Längsteilen und Separieren eines Bandes und insbesondere Metallbandes werden in der DE 38 20 997 C2 und der US 3 724 737 beschrieben.

Ausgehend von dem vorbekannten Stand der Technik liegt der Erfindung das technische Problem zugrunde, eine Anlage zum Längsteilen eines Bandes, insbesondere Metallbandes, der eingangs beschriebenen Art zu schaffen, welche ein wirtschaftliches Aufwickeln der Bandstreifen ohne Mittenausschnitt und ohne Beschädigungen der Bandkanten gewährleistet und auch ohne Aufwickel-Bandzug realisierbar ist. Die Anlage soll insbesondere ein automatisiertes Anwickeln des Bandanfangs ermöglichen. Dazu soll auch ein geeignetes Verfahren geschaffen werden.

Zur Lösung dieser Aufgabe lehrt die Erfindung bei einer gattungsgemäßen Anlage der eingangs beschriebenen Art, dass zumindest einer Steuerrolle, z. B. der ersten Steuerrolle, eine gegen die Steuerrolle anstellbare erste Andrückrolle zum Klemmen des Bandes bzw. des Bandanfangs zugeordnet ist.

Die Erfindung geht zunächst einmal von der Erkenntnis aus, dass ein einwandfreies Aufwickeln des Bandes nach dem Längsteilen ohne Mittenausschnitt und ohne den Einsatz von Breitstreckwalzen möglich ist, wenn das seitliche Auslenken eines Bandstreifens oder beider Bandstreifen mit Hilfe zumindest einer Steuerrolleneinrichtung realisiert wird, die zumindest eine erste Steuerrolle aufweist. Bei einer solchen Steuerrolle handelt es sich bevorzugt um eine zylindrische und folglich nicht konisch ausgebildete Steuerrolle, die z. B. quer zur Bandlaufrichtung verschwenkbar ist und folglich um eine entlang der Bandlaufrichtung R oder parallel zur Bandlaufrichtung R orientierte Schwenkachse verschwenkbar ist. Bandlaufebene meint im Rahmen der Erfindung die "neutrale" Bandlaufebene B des durchlaufenden Bandes von der Längsteileinrichtung (z. B. Spaltschere bzw. Spaltmesser) bis zur Aufwickeleinrichtung, z. B. Aufwickelhaspel in der Regel (etwa) horizontal orientiert ist. Die Bandlaufrichtung R bezieht sich auf die jeweilige Position des Bandes, so dass die Bandlaufrichtung von Ort zu Ort während des Durchlaufs variiert. Bezogen auf die Steuerrollen bzw. Steuerrolleneinrichtungen liegt die Drehachse z. B. in oder parallel zu der Bandlaufrichtung/Bandebene, aus der das Band auf die Rolle aufläuft, vorzugsweise auf die erste Steuerrolle der jeweiligen Steuerrolleneinrichtung. Das Verschwenken der Steuerrolle um diese in oder parallel zu der (einlaufenden) Bandlaufrichtung liegenden Drehachse führt dazu, dass das einlaufende Band in dem Bereich zwischen der Steuerrolle und der davor angeordneten Umlenkrolle verdreht wird. Solche (zylindrischen) Steuerrollen sind aus der Praxis bekannt und sie werden bei Bandbehandlungsanlagen vielfältig zur Steuerung des Bandlaufs, z. B. auch im Zuge einer Bandmittenregelung eingesetzt. Einer Steuerrolle ist in der Regel auch eine Bandkantenerkennung mit entsprechender Sensorik und gegebenenfalls eine Bandkantenregelung auf einen bestimmten Positionssollwert zugeordnet.

Nach einem ersten Aspekt der Erfindung ist einer solchen (verschwenkbaren) Steuerrolle, die der Auslenkung des Bandes in der Bandlaufebene dient, eine Andrückrolle zugeordnet, welche die Funktion einer Treiberrolle übernimmt. Denn mit einer solchen anstellbaren Andrückrolle lässt sich insbesondere der Anwickelprozess automatisieren, so dass ein aufwendiges manuelles Einfädeln bzw. Durchfädeln durch die Anlage vermieden werden kann. Denn erfindungsgemäß werden die Bandstreifen nach der Längsteileinrichtung zunächst z. B. über Leittische und/oder Gurtförderer über die Umlenkrollen (die bevorzugt angetrieben sind) bis (kurz) hinter die Steuerrolle geführt, die zunächst mittig und folglich nicht verschwenkt steht, so dass der Bandstreifen die Steuerrolle ohne Auslenkung überfährt. Die beiden Bandstreifen durchlaufen dabei unterschiedliche Wege, so dass z. B. nur der erste Bandstreifen der (angetriebenen) Steuerrolle zugeführt wird. Anschließend wird die (erste) Andrückrolle gegen die Steuerrolle angestellt und damit der (erste) Bandstreifen geklemmt. Damit besteht nun die Möglichkeit, die Steuerrolle zu verschwenken, und zwar z. B. um eine entlang oder parallel zu der Bandlaufrichtung orientierten Schwenkachse und damit wird der (seitliche) Versatz zu dem zweiten Bandstreifen und folglich ein Versatz in Breitenrichtung erzeugt, so dass die Beabstandung zwischen den beiden Bandstreifen entsteht. Die beiden Bandstreifen werden in dieser beabstandeten Position weiter vorangetrieben, wobei der Steuerrolle z. B. ein Treiber nachgeordnet sein kann, in dem die beiden Bandstreifen beabstandet aber wieder in einer Ebene (bezogen auf die Höhenrichtung) zusammengeführt werden. Dieser Treiber lässt sich dann schließen und es kann ein Bandzug zur Längsteileinrichtung (z. B. Längsteilschere) aufgebaut werden. Anschließend kann dann die der Steuerrolle zugeordnete Andrückrolle abgestellt werden und das Anwickeln auf dem Aufwickelhaspel kann erfolgen. Damit lässt sich ein automatisches oder zumindest teilautomatisches Anwickeln der beiden Bandstreifenanfänge ohne Handeingriff realisieren, wobei in besonders bevorzugter Betriebsweise im Zuge des Anfahrprozesses der Bandstreifen in der beschriebenen Weise zunächst bei mittiger Steuerrolle zugeführt und geklemmt wird, und erst anschließend ein Verschwenken der Steuerrolle erfolgt.

Dabei ist der Längsteileinrichtung für den ersten Bandstreifen eine erste Umlenkrolle und für den zweiten Bandstreifen eine zweite Umlenkrolle zugeordnet, wobei diese (zylindrischen) Umlenkrollen bevorzugt als angetriebene Umlenkrollen ausgebildet sind, um einen automatisierten Anwickelprozess zu ermöglichen. Zwischen der Längsteileinrichtung und den Umlenkrollen können geeignete Führungseinrichtungen, z. B. (positionierbare) Gurtförderer oder (positionierbare) Leittische angeordnet sein.

Nach einem zweiten Aspekt der Erfindung wird vorgeschlagen, dass die erste Umlenkrolle und die zweite Umlenkrolle in einer senkrecht zur Bandlaufebene orientierten Höhenrichtung (bezogen auf den Außenumfang der beiden Umlenkrollen) beabstandet sind, so dass die Bandstreifen unmittelbar hinter der Längsteileinrichtung auf ihrem Weg zu der ersten Umlenkrolle und der zweiten Umlenkrolle in der Höhenrichtung separiert werden. Im Gegensatz zu den aus dem Stand der Technik bekannten Lösungen, bei denen die erste Umlenkrolle und die zweite Umlenkrolle unter Zwischenschaltung der beiden durchlaufenden Bandstreifen unmittelbar gegeneinander positioniert sind, wird in bevorzugter Ausgestaltung der Erfindung eine beabstandete Anordnung der beiden Umlenkrollen vorgeschlagen, so dass die Bandstreifen - bezogen auf die Höhenrichtung - im Bereich der Umlenkrollen in Höhenrichtung beabstandet sind und daher nicht erst hinter der beiden Umlenkrollen, sondern bereits zwischen der Längsteileinrichtung und der ersten/zweiten Umlenkrolle in der Höhenrichtung separiert werden und folglich auseinanderlaufen. Damit werden Beschädigungen der Bandkanten bereits unmittelbar hinter der Längsteileinrichtung und folglich schon vor den Steuerrollen vermieden, die für den seitlichen Versatz und folglich die seitliche Beabstandung der Bandstreifen sorgen.

In einer Ausführungsform der Erfindung besteht die Möglichkeit, dass lediglich dem ersten Bandstreifen eine Steuerrolleneinrichtung mit zumindest einer ersten Steuerrolle zugeordnet ist, so dass lediglich für den ersten Bandstreifen ein seitlicher Versatz bzw. ein Versatz in Breitenrichtung realisiert wird, während der zweite Bandstreifen ohne seitlichen Versatz durch die Anlage läuft. Bei einer solchen Ausführungsform ist es zweckmäßig, wenn der zweiten Umlenkrolle (um welche der zweite Bandstreifen geführt ist) eine dritte Umlenkrolle nachgeordnet ist, wobei dieser dritten Umlenkrolle vorzugsweise ebenfalls eine Andrückrolle (zweite Andrückrolle) zugeordnet ist. Damit besteht die Möglichkeit, im Zuge des Anwickelprozesses auch den zweiten Bandstreifen zu klemmen, z. B. im Bereich der dritten Umlenkrolle zu klemmen. Außerdem kann die dritte Umlenkrolle mit der Andrückrolle eine Treiberfunktion übernehmen.

In einer abgewandelten Ausführungsform ist es vorteilhaft, nicht nur dem ersten Bandstreifen eine erste Steuerrolleneinrichtung, sondern auch dem zweiten Bandstreifen eine zweite Steuerrolleneinrichtung zuzuordnen, wobei die zweite Steuerrolleneinrichtung zumindest eine verschwenkbare zweite Steuerrolle aufweist und wobei dieser zweiten Steuerrolle besonders bevorzugt eine zweite Andrückrolle zugeordnet ist. Folglich werden sowohl der erste Bandstreifen als auch der zweite Bandstreifen mit Hilfe von Steuerrollen seitlich ausgelenkt, so dass ein größerer Abstand zwischen den beiden Bandstreifen und damit auch ein größerer Abstand der beiden Coils auf dem Aufwickelhaspel erzeugt werden kann. Wie beschrieben ist es zweckmäßig, auch dieser zweiten Steuerrolleneinrichtung eine Andrückrolle zuzuordnen, so dass im Zuge des Anwickelprozesses der zweite Bandstreifen ebenso behandelt werden kann, wie der zuvor beschriebene erste Bandstreifen.

Sofern lediglich für den ersten Bandstreifen eine verschwenkbare Steuerrolleneinrichtung vorgesehen ist, kann für ein kantengerades Wickeln der beiden Bandstreifen die Lage des einen Bandstreifens durch Positionierung der Aufwickeleinrichtung bzw. des Aufwickelhaspels und die Lage des anderen Bandstreifens durch Verschwenken der Steuerrolleneinrichtung gesteuert oder geregelt werden. Sofern für beide Bandstreifen jeweils eine Steuerrolleneinrichtung vorgesehen ist, kann die Lage beider Bandstreifen mit Hilfe der Steuerrolleneinrichtungen gesteuert oder geregelt werden, so dass eine Positionierung der Aufwickeleinrichtung (in der Bandlaufebene und quer zur Bandlaufrichtung) nicht erfolgen muss.

Es liegt dabei im Rahmen der Erfindung, dass die erste Steuerrolleneinrichtung und/oder die zweite Steuerrolleneinrichtung jeweils nur eine erste Steuerrolle bzw. eine zweite Steuerrolle aufweist. Bei einer solchen Ausführungsform erfolgt die Auslenkung des Bandstreifens bzw. das Beabstanden der Bandstreifen lediglich mit einer einzigen Steuerrolle (für den jeweiligen Bandstreifen). In bevorzugter Weiterbildung der Erfindung wird jedoch vorgeschlagen, dass die erste Steuerrolleneinrichtung und/oder die zweite Steuerrollenrichtung (jeweils) als Doppelsteuerrolleneinrichtung ausgebildet ist bzw. ausgebildet sind. Die erste Steuerrolleneinrichtung kann folglich nicht nur eine, sondern zwei in Bandlaufrichtung nacheinander angeordnete (erste) Steuerrollen aufweisen. Alternativ oder ergänzend kann die zweite Steuerrolleneinrichtung nicht nur eine, sondern zwei in Bandlaufrichtung nacheinander angeordnete (zweite) Steuerrollen aufweisen, wobei die Steuerrollen einer solchen Doppelrollensteuereinrichtung beide verschwenkbar sind. Daher besteht die Möglichkeit, dass die beiden Steuerrollen einer Doppelsteuerrolleneinrichtung einzeln oder gemeinsam in einem Gestell der Doppelsteuerrolleneinrichtung verschwenkbar sind. Bevorzugt sind die beiden Steuerrollen einer Doppelsteuerrolleneinrichtung in einem gemeinsamen Gestell angeordnet, welches dann insgesamt verschwenkt wird. Eine solche Ausführungsform mit Doppelsteuerrolleneinrichtung, die auch einfach als Doppelsteuerrolle bezeichnet wird und bevorzugt (im Wesentlichen) proportional wirkend ausgebildet ist, hat den Vorteil, dass in den Bandstreifen durch das Verschwenken wesentlich geringere Bandspannungen entstehen als bei einer einzelnen Steuerrolle. Denn bei einer (proportional wirkenden) Doppelsteuerrolle wird das Band nur verdreht, was zu einer leicht parabelförmigen Spannungsüberlagerung führt. Demgegenüber wird bei einer einzelnen Steuerrolle an einer Bandstreifenseite gezogen. Insbesondere bei weichen Materialien können folglich mit Doppelsteuerrollen unerwünschte Plastifizierungen vermieden werden, die zu einseitigen Randwellen führen können.

Insbesondere unter dem Aspekt eines automatisierten Anwickelprozesses ist es vorteilhaft, wenn eine oder mehrere, vorzugsweise alle Steuerrollen angetrieben sind. Ferner ist es vorteilhaft, wenn auch eine oder mehrere, vorzugsweise alle Umlenkrollen und insbesondere die erste Umlenkrolle und die zweite Umlenkrolle sowie gegebenenfalls die dritte Umlenkrolle angetrieben sind. Die Umlenkrollen und/oder die Steuerrollen sind bevorzugt zylindrisch (das heißt konisch) ausgebildet.

Sofern mit Doppelsteuerrolleneinrichtungen gearbeitet wird, kann es ausreichen, dass lediglich einer Steuerrolle einer solchen Doppelsteuerrolleneinrichtung eine Andrückrolle zugeordnet ist, z. B. der in Bandlaufrichtung hinteren Steuerrolle einer Doppelsteuerrolleneinrichtung. Alternativ besteht aber auch die Möglichkeit, dass beiden Steuerrollen einer Doppelsteuerrolleneinrichtung jeweils eine Andrückrolle zugeordnet ist.

Es ist im Übrigen zweckmäßig, in Bandlaufrichtung hinter den Steuerrolleneinrichtungen eine (gemeinsame) Treibereinrichtung für die Bandstreifen anzuordnen. Eine solche Treibereinrichtung besteht in der Regel aus zwei gegeneinander anstellbaren Treiberrollen von denen eine oder beide angetrieben sind. Mit Hilfe einer solchen Treibereinrichtung lassen sich die beiden (in der Breitenrichtung versetzten) und zunächst in unterschiedlichen Höhen geführten Bandstreifen wieder zusammenführen, und zwar bezogen auf die Höhenrichtung zusammenführen, so dass die beiden Bandstreifen hinter der Treibereinrichtung in einer gemeinsamen Bandebene, jedoch in Breitenrichtung mit Abstand versetzt zueinander verlaufen. Der Treibereinrichtung kann optional eine Querteileinrichtung, z. B. eine Querteilschere nachgeordnet sein, so dass die Bandanfänge hinter der Treibereinrichtung vor dem Anwickeln auf die Bandhaspel beschnitten werden können.

Im Übrigen ist es zweckmäßig, zwischen der Längsteileinrichtung und den Umlenkrollen Führungseinrichtungen für die Bandstreifen, z. B. Gurtförderer oder Leittische vorzusehen, die bevorzugt positionierbar sind. Optional oder ergänzend ist es vorteilhaft, auch zwischen den Umlenkrollen und den Steuerrolleneinrichtungen sowie gegebenenfalls zwischen den Steuerrolleneinrichtungen und der Treibereinrichtung Führungseinrichtungen für die Bandstreifen vorzusehen, z. B. Gurtförderer oder Leittische der beschriebenen Art.

Die Erfindung betrifft nicht nur die beschriebene Anlage, sondern auch ein Verfahren zum Längsteilen (und Aufwickeln) eines Bandes, insbesondere Metallbandes, wobei ein solches Verfahren besonders bevorzugt mit der beschriebenen Anlage durchgeführt wird. Das Band wird zunächst mit einer Längsteileinrichtung in zumindest einen ersten Bandstreifen und einen zweiten Bandstreifen aufgeteilt, nach der Längsteileinrichtung werden der erste Bandstreifen um eine erste Umlenkrolle und der zweite Bandstreifen um eine zweite Umlenkrolle geführt und anschließend wird zumindest der erste Bandstreifen über eine verschwenkbare erste Steuerrolle einer ersten Steuerrolleneinrichtung geführt und dabei wird der erste Bandstreifen in der Bandlaufebene relativ zu dem zweiten Bandstreifen beabstandet, wobei die beiden beabstandeten Bandstreifen schließlich mit einer (gemeinsamen) Aufwickelvorrichtung (mit vorgegebenen Abstand) gemeinsam aufgewickelt werden. Nach einem ersten Vorschlag ist vorgesehen, dass die Bandstreifen in der Höhenrichtung unmittelbar hinter der Längsteileinrichtung auf ihrem Weg zu der ersten und der zweiten Umlenkrolle separiert werden, indem die erste und die zweite Umlenkrolle in einer senkrecht zur Bandlaufebene orientierten Höhenrichtung (bezogen auf den Außenumfang) beabstandet werden. Nach einem zweiten Vorschlag der Erfindung mit selbständiger Bedeutung wird der erste Bandstreifen über eine verschwenkbare erste Steuerrolle geführt, gegen die während des Anwickelprozesses zur Klemmung des Bandanfangs des ersten Bandstreifens eine erste Andrückrolle angestellt wird. Für den zweiten Bandstreifen kann auf eine separate Steuerrolle verzichtet werden und in diesem Fall wird der zweite Bandstreifen hinter der zweiten Umlenkrolle vorzugsweise über eine dritte Umlenkrolle geführt, wobei gegen diese dritte Umlenkrolle während des Anwickelprozesses zur Klemmung des Bandanfangs des zweiten Bandstreifens bevorzugt eine zweite Andrückrolle angestellt wird. Bevorzugt wird jedoch auch der zweite Bandstreifen hinter der zweiten Umlenkrolle über eine verschwenkbare zweite Steuerrolle geführt, wobei in diesem Fall während des Anwickelprozesses zur Klemmung des Bandanfangs des zweiten Bandstreifens eine zweite Andrückrolle gegen die zweite Steuerrolle angestellt wird. Die Bandstreifen durchlaufen hinter den Steuerrollen bevorzugt einen gemeinsamen Treiber mit zwei gegeneinander anstellbaren Treiberrollen, von denen zumindest eine angetrieben ist.

Bevorzugt werden die Bandstreifen (nach dem Längsteilen) mit verhältnismäßig geringen Umschlingungswinkeln um die Umlenkrollen und/oder die Steuerrollen geführt. Besonders bevorzugt betragen die Umschlingungswinkel an den Umlenkrollen und insbesondere an der ersten Umlenkrolle und der zweiten Umlenkrolle sowie gegebenenfalls an der dritten Umlenkrolle und/oder an den Steuerrollen, vorzugsweise an der/den ersten Steuerrolle(n) und/oder der/den zweiten Steuerrolle(n), weniger als 45°, vorzugsweise weniger als 25°. Dabei geht die Erfindung von der Erkenntnis aus, dass kleine Umschlingungswinkel für den hier erforderlichen (geringen) Versatz von z.B. bis zu 10 mm ausreichen. Die kleinen Umschlingungswinkel ermöglichen jedoch den beschriebenen automatisierten Anwickelprozess und außerdem wird die Entstehung von Bandkrümmungen vermieden.

Für ein kantengerades Wickeln der beiden Bandstreifen wird die Lage des einen Bandstreifens durch Positionierung der Aufwickeleinrichtung und die Lage des anderen Bandstreifens durch Verschwenken der Steuerrolleneinrichtung gesteuert oder geregelt. Dieses gilt insbesondere für Ausführungsformen, bei denen lediglich ein Bandstreifen über eine Steuerrolle ausgelenkt wird. Sofern beide Bandstreifen über jeweils eine Steuerrolle ausgelenkt wird, kann für ein kantengerades Wickeln der beiden Bandstreifen die Lage beider Bandstreifen mit Hilfe der Steuerrollen realisiert werden.

In bevorzugter Weiterbildung besteht im Übrigen die Möglichkeit, die Drehachse der Steuerrollen bzw. der Steuerrolleneinrichtung variabel positionierbar auszugestalten. Dazu wird auf die Figurenbeschreibung verwiesen.

Nach einem weiteren Aspekt der Erfindung ist der Anwickelprozess und folglich das Anwickeln eines Bandanfangs eines Bandes von besonderer Bedeutung. Nach diesem Aspekt wird vorgeschlagen, bei einer Anlage der beschriebenen Art, den Bandanfang zumindest des ersten Bandstreifens beim Anfahren zunächst bei mittig eingestellter Steuerrolleneinrichtung bzw. Steuerrolle bis zumindest zu der ersten Steuerrolleneinrichtung bzw. Steuerrolle vorzufahren und den ersten Bandstreifen anschließend mit der ersten Andrückrolle an der ersten Steuerrolle zu klemmen. Danach kann die Steuerrolle verschwenkt werden und anschließend der Bandstreifen weitergefahren werden, bis zum Aufwickelhaspel. In derselben Weise kann das Anfahren bei einer Ausführungsform mit Steuerrollen für den zweiten Bandstreifen realisiert werden.

Die erfindungsgemäße Anlage lässt sich insbesondere auch im Auslaufteil einer kontinuierlichen Bandprozesslinie bzw. Bandbehandlungsanlage einsetzen, z. B. im Auslaufteil einer Beschichtungslinie oder dergleichen. Bislang war der Einsatz einer solchen Längsteilanlage im Auslaufteil einer komplexen Linie wegen der hohen Coilwechselzeiten problematisch, so dass die Längsteilanlage in der Regel separat von der eigentlichen Bandbehandlungsanlage betrieben wurde. Erfindungsgemäß besteht nun die Möglichkeit, die Längsteilanlage unmittelbar an eine Bandbehandlungsanlage anzuschließen bzw. in das Auslaufteil der Bandbehandlungsanlage zu integrieren.

Im Folgenden wird die Erfindung anhand einer lediglich ein Ausführungsbeispiel darstellenden Zeichnung näher erläutert. Es zeigen:
- Fig. 1: eine erfindungsgemäße Anlage zum Längsteilen und Aufwickeln eines Bandes in einer vereinfachten Seitenansicht,
- Fig. 2: Vertikalschnitte 1 bis 4 durch den Gegenstand nach Fig. 1,
- Fig. 3: eine zweite Ausführungsform einer erfindungsgemäßen Anlage,
- Fig. 4: Vertikalschnitte 1 bis 5 durch die Anlage nach Fig. 3,
- Fig. 5: eine dritte Ausführungsform einer erfindungsgemäßen Anlage in einer vereinfachten Seitenansicht,
- Fig. 6: Schnitte 1 bis 4 durch die Anlage nach Fig. 5,
- Fig. 7: Schnitte 1 bis 4 durch eine vierte Ausführungsform der Anlage nach Fig. 4,
- Fig. 8: Schnitte 1 bis 4 durch eine weitere Ausführungsform der Anlage nach Fig. 5,
- Fig. 9: eine fünfte Ausführungsform einer erfindungsgemäßen Anlage in einer vereinfachten Seitenansicht und
- Fig. 10: eine sechste Ausführungsform einer erfindungsgemäßen Anlage in einer vereinfachten Seitenansicht,
- Fig. 11: Schnitte 1 bis 5 durch die Anlage nach Fig. 10.

Die Figuren zeigen eine Anlage zum Längsteilen und Aufwickeln eines Bandes 1, und zwar bevorzugt eines Metallbandes. Dazu weist die Anlage eine Längsteileinrichtung 2 auf, die als Spaltschere z. B. mit rotierenden Kreismessern oder dergleichen arbeiten kann. Mit Hilfe dieser Längsteileinrichtung 1 wird das Band 1 in zumindest einen ersten Bandstreifen 1a und einem zweiten Bandstreifen 1b aufgeteilt. Im Vordergrund steht dabei die Problematik, die beiden Bandstreifen 1a, 1b voneinander zu separieren und folglich zu beabstanden, wobei sich das Beabstanden im Rahmen der Erfindung auf die Breitenrichtung bezieht, so dass die Bandstreifen in der Bandlaufebene voneinander separiert werden sollen, um sie schließlich beabstandet voneinander auf Coils auf einer gemeinsamen Aufwickeleinrichtung aufzuwickeln.

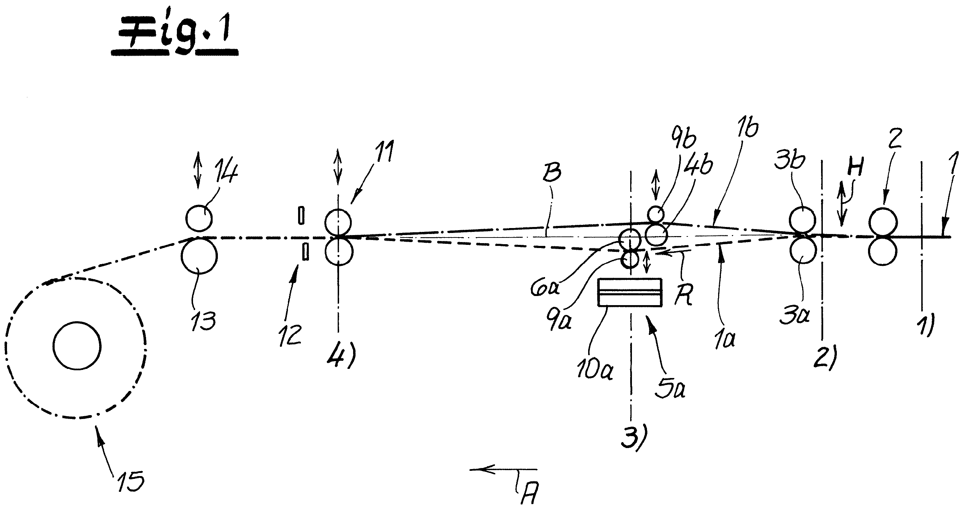

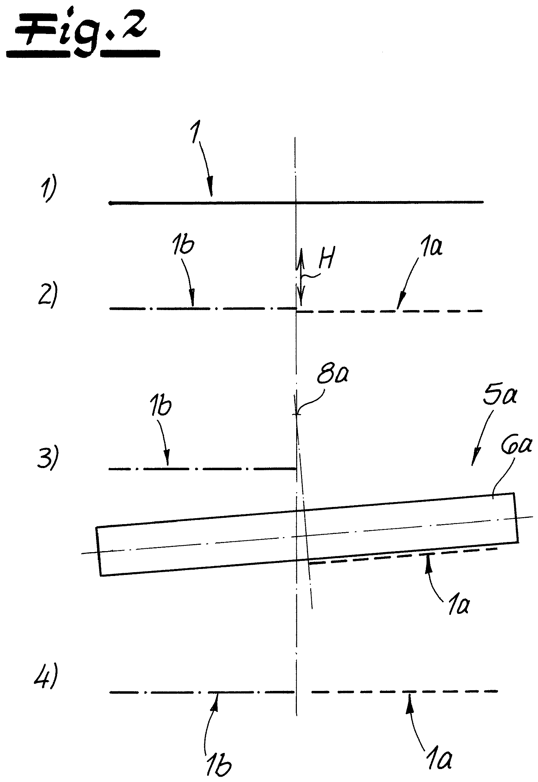

Dazu weist die Anlage zwei der Längsteileinrichtung 2 nachgeordnete Umlenkrollen 3a, 3b auf, und zwar eine erste Umlenkrolle 3a, die dem ersten Bandstreifen 1a zugeordnet ist und eine zweite Umlenkrolle 3b, die dem zweiten Bandstreifen 1b zugeordnet ist. In der Ausführungsform nach Fig. 1 ist der ersten Umlenkrolle 3a für den ersten Bandstreifen 1a eine erste Steuerrolleneinrichtung 5a nachgeordnet, die eine erste Steuerrolle 6a aufweist. Diese erste Steuerrolle 6a ist z. B. um eine in Bandlaufrichtung R oder parallel zur Bandlaufrichtung R orientierte Schwenkachse 8a schwenkbar, so dass sich der erste Bandstreifen 1a bei verschwenkter Steuerrolle 6a von dem zweiten Bandstreifen 1b beabstanden lässt. Die Bandlaufrichtung R bezieht sich dabei auf den jeweiligen Ort in der Anlage, so dass diese variiert. Es handelt sich jeweils um die Bandlaufrichtung R, aus der das Band kommt und entlang oder parallel zu dieser auf die Rolle auflaufenden Bandlaufrichtung R ist die Schwenkachse 8a orientiert. Demgegenüber zeichnet A die "neutrale" Arbeitsrichtung und auch die Bandlaufebene B bezieht sich auf die "neutrale" Ebene des globalen Bandlaufs. Für den zweiten Bandstreifen 1b ist in dem Ausführungsbeispiel nach Fig. 1 keine Steuerrolle, sondern eine zusätzliche dritte Umlenkrolle 4b vorgesehen, so dass der zweite Bandstreifen 1b die Anlage ohne seitlichen Versatz durchläuft. Die Verhältnisse werden insbesondere durch eine vergleichende Betrachtung der Figuren 1 und 2 deutlich, wobei die Fig. 2 Vertikalschnitte an verschiedenen Positionen der Anlage nach Fig. 1 zeigt. So ist im Schnitt 1 das Band vor dem Mittenteilen gezeigt und Schnitt 2 zeigt das Band nach dem Mittenteilen und folglich zwischen der Längsteileinrichtung 2 und den Umlenkrollen 3a, 3b. Hier ist erkennbar, dass die beiden Bandstreifen 1a, 1b zunächst noch nicht beabstandet werden, jedoch entlang der Höhenrichtung H auseinander laufen. Schnitt 3 zeigt dann die verschwenkte erste Steuerrolle 6a, über welche der erste Bandstreifen 1a geführt ist und es wird deutlich, dass dieser Bandstreifen 1a durch die Schrägstellung der Steuerrolle 6a seitlich versetzt und damit gegenüber dem zweiten Bandstreifen 1b beabstandet wird. Gemäß Schnitt 4 werden die beiden Bandstreifen 1a, 1b dann in ihrem beabstandeten Zustand wieder in eine Ebene zusammengeführt, und zwar mit Hilfe der Treibereinrichtung 11. In diesem im Schnitt 4 der Fig. 2 dargestellten Zustand lassen sich die Bandstreifen 1a, 1b dann mit der Aufwickeleinrichtung 15, die z. B. als Haspel ausgebildet ist, gemeinsam zu zwei beabstandeten Coils aufwickeln.

Von besonderer Bedeutung ist dabei unter anderem die Tatsache, dass die beiden Umlenkrollen 3a, 3b in der senkrecht zur Bandlaufebene B orientierten Höhenrichtung H bezogen auf den Außenumfang beabstandet sind. Dieses ist in Fig. 1 angedeutet und ist erkennbar, dass durch diese beabstandete Anordnung die beiden Bandstreifen 1a, 1b unmittelbar hinter der Längsteileinrichtung 2 auf ihrem Weg zu den Umlenkrollen 3a, 3b in der Höhenrichtung H separiert werden. Die Separierung in Höhenrichtung erfolgt demnach nicht erst hinter den Umlenkrollen 3a, 3b, sondern bereits zwischen der Längsteileinrichtung 2 und den Umlenkrollen 3a, 3b. Auf diese Weise werden Beschädigungen der Bandkanten von Beginn an vermieden, da die Bandkanten bereits unmittelbar nach dem Auslaufen aus der Längsteileinrichtung 2 separiert werden, und zwar zunächst nur in Höhenrichtung und dann im weiteren Verlauf durch die Steuerrolleneinrichtung 5a auch in der Breitenrichtung, so dass die Bandstreifen dann schließlich in der Treibereinrichtung 15 in der Höhenrichtung wieder zusammengeführt werden können.

Ferner ist in Fig. 1 erkennbar, dass die Steuerrolleneinrichtung 5a eine der ersten Steuerrolle 6a zugeordnete erste Andrückrolle 9a aufweist, die variabel gegen die erste Steuerrolle 6a anstellbar ist. Zusätzlich ist auch der dritten Umlenkrolle 4b, die dem zweiten Bandstreifen zugeordnet ist, eine zweite Andrückrolle 9b zugeordnet, die gegen die dritte Umlenkrolle 4b anstellbar ist. In Fig. 1 ist im Übrigen das Gestell 10a der ersten Steuerrolleneinrichtung 5a schematisch vereinfacht angedeutet. Den Andrückrollen kommt insbesondere im Zuge des Anwickelprozesses und folglich beim Anfahren der Anlage eine besondere Bedeutung zu. Im Zuge des Anwickelns läuft zunächst der Bandanfang des Bandes 1 (mittig) durch die Längsteilschere 2 und die beiden Bandstreifen 1a, 1b laufen dann über in den Figuren nicht dargestellte Führungseinrichtungen, z. B. Leittische oder Gurtförderer, zu den Umlenkrollen 3a, 3b und von dort wiederum über Führungseinrichtungen, z. B. Leittische oder Gurtförderer, z. B. Leittische oder Gurtförderer, in den Bereich einerseits der Steuerrolle 6a und andererseits der dritten Umlenkrolle 4b. Die Bandanfänge sind zu diesem Zeitpunkt nur bezogen auf die Höhenrichtung, nicht jedoch bezogen auf die Breitenrichtung separiert. Die Steuerrolle 6a ist noch mittig orientiert und folglich nicht verschwenkt. Nachdem der Bandanfang des ersten Bandstreifens 1a an der ersten Steuerrolle 6a vorbeigeführt wurde, wird die erste Andrückrolle 9a gegen die Steuerrolle 6a angestellt und damit der Bandanfang des ersten Bandstreifens 1a geklemmt. Nun verschwenkt die Steuerrolle 6a um die in Fig. 2 dargestellte Drehachse 8a und versetzt dadurch den ersten Bandstreifen 1a in Breitenrichtung hin zum Rand, so wie es in Fig. 2 dargestellt ist. Anschließend werden die beiden Bandstreifen durch die geöffnete Treibereinrichtung 11 hindurchgeführt, bis zu der Querteilschere 12. Die Treibereinrichtung 11 schließt und baut Bandzug zur Längsteilschere 1 auf. Danach kann die Andrückrolle 9a abgestellt werden. Die Streifenanfänge werden mit der Querteilschere 12 beschnitten und dann werden die beiden Bandanfänge weiter durch den Umlenktreiber mit den Rollen 13, 14 zum Aufwickelhaspel 15 geführt. Das Anwickeln erfolgt z. B. mittels eines Gurtwicklers oder mit einem Klemmschlitz im Haspeldorn. Für ein kantengerades Wickeln der beiden Bandstreifen 1a, 1b wird die Lage des zweiten Bandstreifens durch Positionierung der Aufwickelhaspel 15 gesteuert bzw. geregelt und die Lage des ersten Bandstreifens 1a wird durch Verschwenken der Steuerrolleneinrichtung 5a gesteuert oder geregelt.

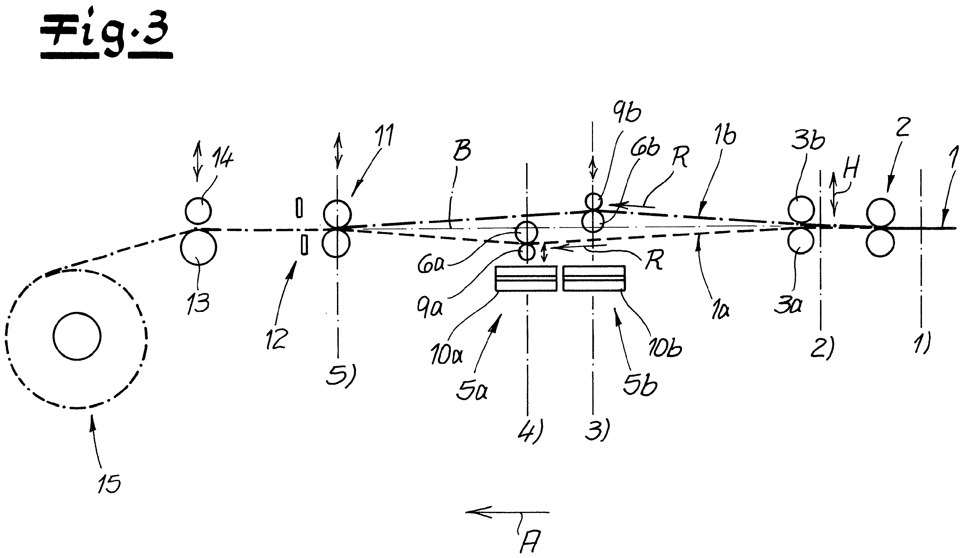

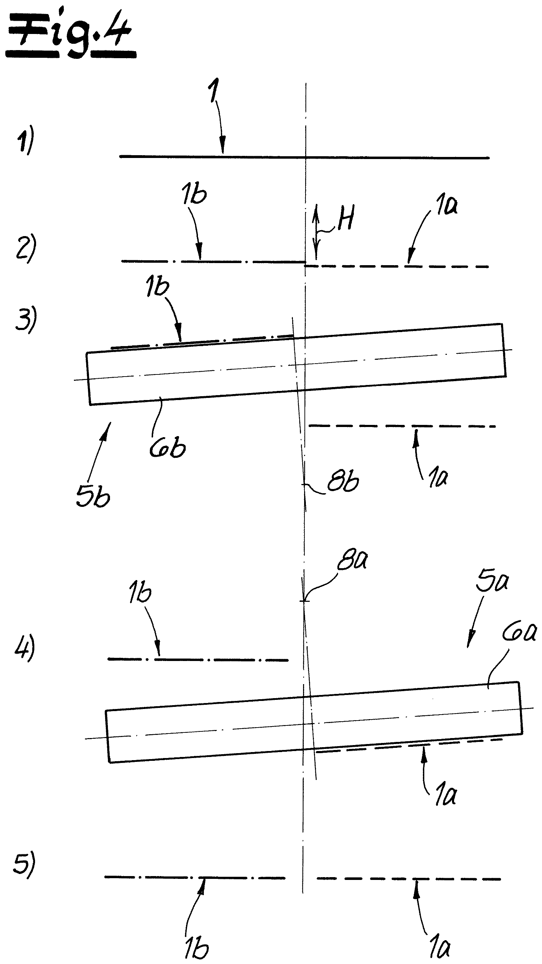

Die in Fig. 3 dargestellte Ausführungsform unterscheidet sich von der in Fig. 1 dargestellten Ausführungsform dadurch, dass nicht nur der erste Bandstreifen 1a mit einer ersten Steuerrolleneinrichtung 5a, sondern auch der zweite Bandstreifen 1b mit einer zweiten Steuerrolleneinrichtung 5b versetzt werden kann. Der zweiten Umlenkrolle 3b ist bei dieser Ausführungsform folglich nicht eine dritte Umlenkrolle, sondern eine zweite Steuerrolleneinrichtung 5b mit einer zweiten Steuerrolle 6b und außerdem einer zweiten Andrückrolle 9b nachgeordnet. Die Funktionsweise ergibt sich wiederum durch eine vergleichende Betrachtung der Figuren 3 und 4, denn es ist erkennbar, dass der erste Bandstreifen 1a durch Verschwenken der ersten Steuerrolle 6a und der zweite Bandstreifen 1b durch Verschwenken der zweiten Steuerrolle 6b versetzt wird. Auf diese Weise wird bei gleichen Drehwinkeln der Steuerrollen ein größerer Versatz in der Breitenrichtung zwischen den Bandstreifen 1a, 1b erzeugt. Der Rahmen 10b und die Schwenkachse 8b der zweiten Steuerrolleneinrichtung 5b sind in den Figuren 3 und 4 ebenfalls angedeutet.

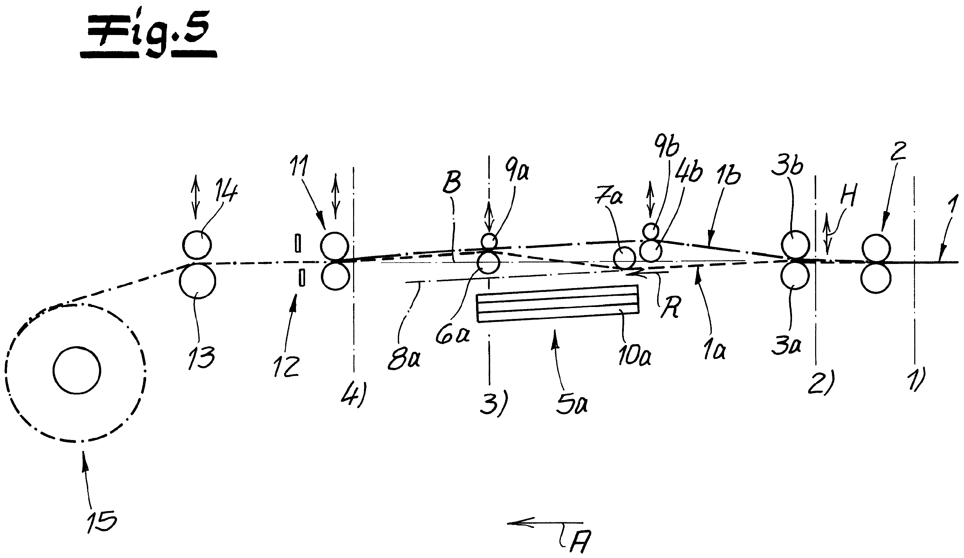

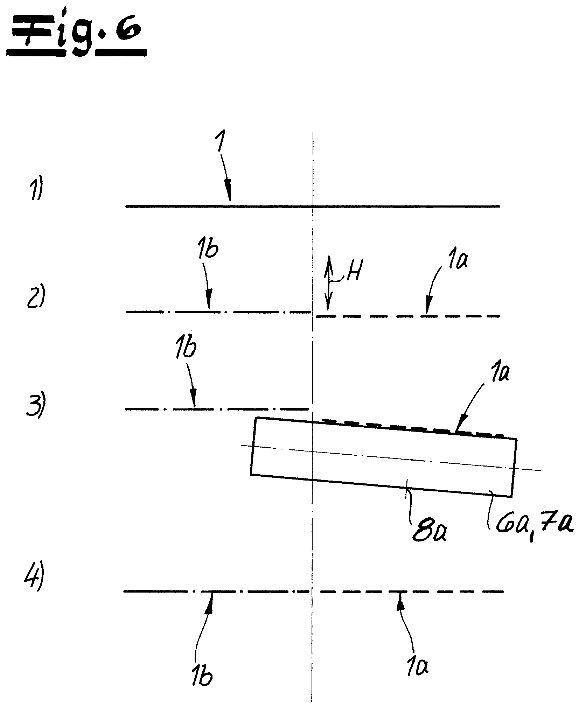

Die Figuren 5 und 6 zeigen eine weitere Ausführungsform der Erfindung, die sich - ausgehend von Fig. 1 - dadurch unterscheidet, dass die erste Steuerrolleneinrichtung 5a als Doppelsteuerrolleneinrichtung mit einer Doppelsteuerrolle bzw. zwei einzelnen Steuerrollen 6a, 7a besteht, die auf einem gemeinsamen Rahmen 10a gelagert sind, der um die Schwenkachse 8a verschwenkbar ist. Solche Doppelsteuerrollen sind aus dem Stand der Technik grundsätzlich für die Bandlaufregelung bekannt und der Vorteil einer solchen Anordnung ist, dass in dem Bandstreifen durch das Verschwenken geringere Bandspannungen entstehen.

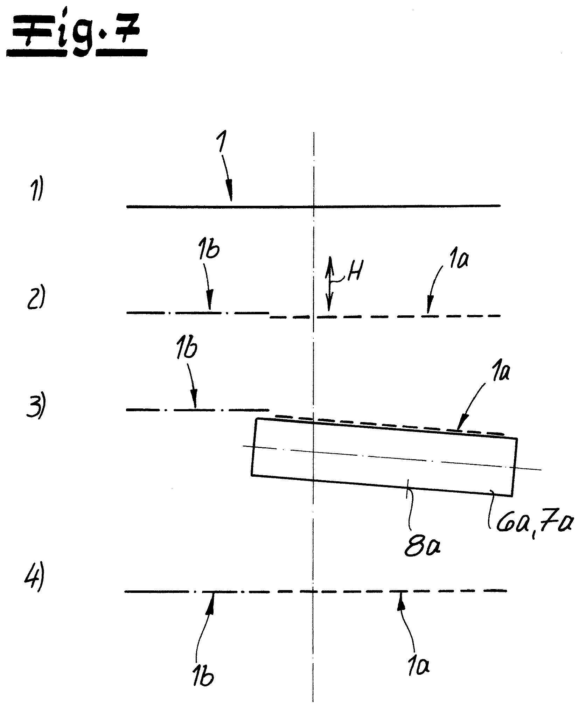

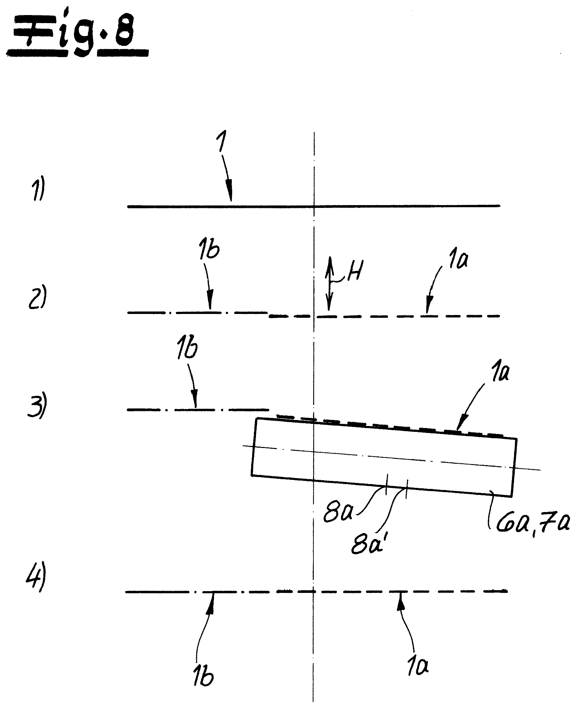

In Fig. 7 ist im Übrigen eine Abwandlung dargestellt, bei der nicht zwei Bandstreifen 1a, 1b gleicher Breite, sondern Bandstreifen 1a, 1b mit ungleicher Breite erzeugt werden. Man erkennt, dass die Drehachse nicht mehr optimal so liegt, dass nur ein Verdrehen des ersten Bandstreifens 1a erfolgt. Davon ausgehend wird in der abgewandelten Ausführungsform nach Fig. 8 vorgeschlagen, die Drehachse 8a variabel positionierbar auszulegen, so dass sich die Drehachse 8a in die angedeutete Position 8a' verschieben lässt.

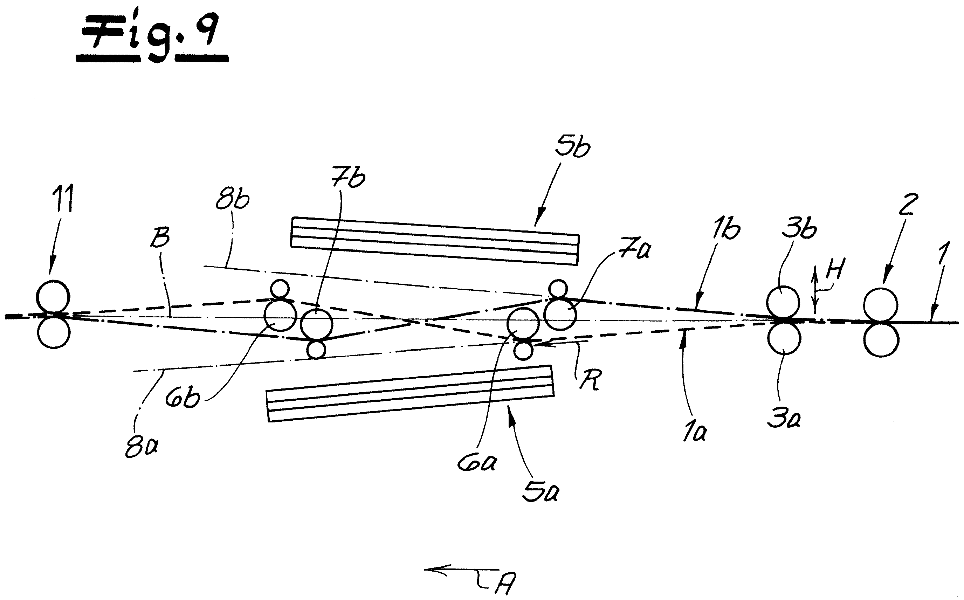

Fig. 9 zeigt eine weitere Ausführungsform, die gleichsam eine Kombination der Ausführungsformen nach Figuren 2 und 4 dargestellt, denn hier sind sowohl dem ersten Bandstreifen 1a als auch dem zweiten Bandstreifen 1b jeweils Steuerrolleneinrichtungen 5a, 5b zugeordnet, wobei diese für beide Bandstreifen jeweils als Doppelsteuerrolleneinrichtung ausgebildet sind, so dass nicht nur die erste Steuerrolleneinrichtung 5a zwei Steuerrollen 6a, 7a, sondern auch die zweite Steuerrolleneinrichtung 5b zwei Steuerrollen 6b, 7b aufweist.

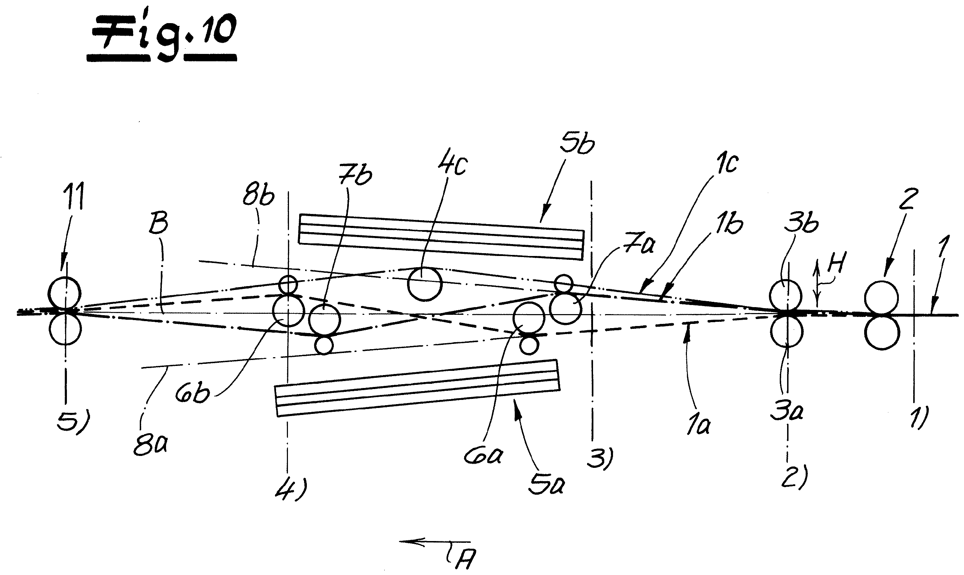

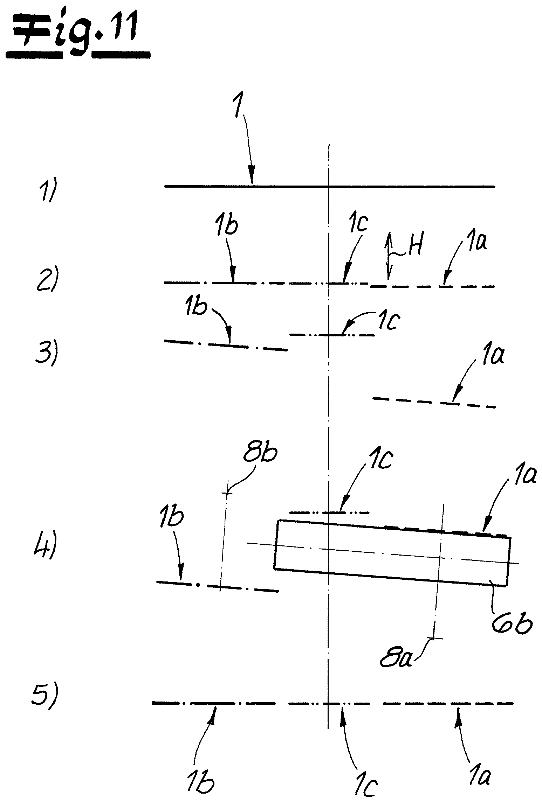

Schließlich zeigen die Figuren 10 und 11 eine abgewandelte Variante, bei der das Band 1 nicht nur in zwei Bandstreifen, sondern in drei Bandstreifen 1a, 1b, 1c aufgeteilt wird, wobei der dritte Bandstreifen 1c der mittige Bandstreifen ist, der ohne Auslenkung in Breitenrichtung durch die Anlage hindurchgeführt wird, während der erste Bandstreifen 1a und der zweite Bandstreifen 1b jeweils seitlich versetzt werden. Insofern unterscheidet sich diese Ausführungsform vor allem dadurch, dass zusätzlich eine dritte Umlenkrolle 4c für den dritten Bandstreifen vorgesehen ist.

Wesentlich sind erfindungsgemäß die Steuerrolleneinrichtungen bzw. Steuerrollen, die um eine Achse 8a, 8b verschwenkbar sind. Diese Schwenkachse 8a, 8b verläuft entlang der Bandlaufrichtung R, wobei R stets die Bandlaufrichtung des in die Steuerrolleneinrichtung einlaufenden Bandes meint. Es handelt sich folglich um die Bandlaufrichtung R (bzw. die entsprechende Bandebene), welche dass auf die jeweils erste bzw. eingangsseitige Steuerrolle der jeweiligen Steuerrolleneinrichtung auflaufende Band einnimmt.

## Patentansprüche

1. Anlage zum Längsteilen eines Bandes (1), insbesondere Metallbandes, mit
- einer Längsteileinrichtung (2) zum Aufteilen des Bandes (1) in zumindest einen ersten Bandstreifen (1a) und einen zweiten Bandstreifen (1b),
- einer der Längsteileinrichtung (2) nachgeordneten ersten Umlenkrolle (3a) zum Umlenken des ersten Bandstreifens (1a) und einer der Längsteileinrichtung (2) nachgeordneten zweiten Umlenkrolle (3b) zum Umlenken des zweiten Bandstreifens (1b),
- zumindest einer der ersten Umlenkrolle (3a) nachgeordneten ersten Steuerrolleneinrichtung (5a) mit zumindest einer ersten Steuerrolle (6a), die zum Beabstanden des ersten Bandstreifens (1a) von dem zweiten Bandstreifen (1b) um eine z. B. in Bandlaufrichtung R oder parallel zur Bandlaufrichtung R orientierte Schwenkachse (8a) verschwenkbar ist,
- und einer Aufwickeleinrichtung (15), mit welcher die beiden beabstandeten Bandstreifen (1a, 1b) gemeinsam aufwickelbar sind,
**dadurch gekennzeichnet, dass** zumindest einer Steuerrolle (6a) eine gegen die Steuerrolle (6a) anstellbare erste Andrückrolle zum Klemmen des Bandes zugeordnet ist.

2. Anlage nach Anspruch 1, **dadurch gekennzeichnet, dass** die erste Umlenkrolle (3a) und die zweite Umlenkrolle (3b) in einer senkrecht zur Bandlaufebene (B) orientierten Höhenrichtung (H) beabstandet sind, so dass die Bandstreifen (1a, 1b) unmittelbar hinter der Längsteileinrichtung (2) auf ihrem Weg zu der ersten Umlenkrolle (1a) und der zweiten Umlenkrolle (1b) in der Höhenrichtung (H) separiert werden.

3. Anlage nach Anspruch 1 oder 2, **dadurch gekennzeichnet, dass** der zweiten Umlenkrolle (3b) für den zweiten Bandstreifen (1b) eine dritte Umlenkrolle (4b) nachgeordnet ist, wobei der dritten Umlenkrolle (4b) vorzugsweise eine zweite Andrückrolle (9b) zugeordnet ist.

4. Anlage nach Anspruch 1 oder 2, **dadurch gekennzeichnet, dass** der zweiten Umlenkrolle (3b) eine zweite Steuerrolleneinrichtung (5b) mit zumindest einer verschwenkbaren zweiten Steuerrolle (6b) nachgeordnet ist, wobei der zweiten Steuerrolle (6b) vorzugsweise eine zweite Andrückrolle (9b) zugeordnet ist.

5. Anlage nach einem der Ansprüche 1 bis 4, **dadurch gekennzeichnet, dass** die erste Steuerrolleneinrichtung (5a) als Doppelsteuerrolleneinrichtung bestehend aus zwei ersten Steuerrollen (6a, 7a) ausgebildet ist und/oder dass die zweite Steuerrolleneinrichtung (5b) als Doppelsteuerrolleneinrichtung bestehend aus zwei zweiten Steuerrollen (6b, 7b) ausgebildet ist.

6. Anlage nach Anspruch 5, **dadurch gekennzeichnet, dass** in der ersten und/ oder zweiten Doppelsteuerrolleneinrichtung (5a, 5b) zumindest der in Bandlaufrichtung (R) hinteren ersten und/oder zweiten Steuerrolle (6a, 7a, 6b, 7b) eine erste und/oder zweite Andrückrolle (9a, 9b) zugeordnet ist/sind.

7. Anlage nach einem der Ansprüche 1 bis 6, **dadurch gekennzeichnet, dass** der oder den Steuerrollen (6a, 7a, 6b, 7b) eine Treibereinrichtung (11) zum Zusammenführen der in der Bandlaufebene beabstandeten Bandstreifen nachgeordnet ist, die vorzugsweise zwei gegeneinander anstellbare Treiberrollen aufweist.

8. Anlage nach einem der Ansprüche 1 bis 7, **dadurch gekennzeichnet, dass** eine oder mehrere Umlenkrollen (3a, 3b, 4b, 4c) angetrieben ist/sind und/oder dass eine oder mehrere Steuerrollen (6a, 7a, 6b, 7b) angetrieben ist/sind.

9. Anlage nach einem der Ansprüche 1 bis 8, **dadurch gekennzeichnet, dass** zwischen der Längsteileinrichtung (2) und den Umlenkrollen (3a, 3b) und/oder zwischen den Umlenkrollen (3a, 3b) und der oder den Steuerrollen (6a, 6b, 7a, 7b) Führungseinrichtungen für die Bandstreifen (1a, 1b) angeordnet sind, z. B. Gurtförderer oder Leittische.

10. Verfahren zum Längsteilen eines Bandes, insbesondere mit einer Anlage nach einem der Ansprüche 1 bis 9,
wobei das Band mit einer Längsteileinrichtung in zumindest einen ersten Bandstreifen und einen zweiten Bandstreifen aufgeteilt wird, wobei nach der Längsteileinrichtung der erste Bandstreifen um eine erste Umlenkrolle und der zweite Bandstreifen um eine zweite Umlenkrolle geführt werden,
wobei zumindest der erste Bandstreifen anschließend über eine um eine Schwenkachse verschwenkbare erste Steuerrolle einer ersten Steuerrolleneinrichtung geführt ist, und dabei der erste Bandstreifen in der Bandlaufebene relativ zu dem zweiten Bandstreifen beabstandet wird,
wobei die beiden beabstandeten Bandstreifen schließlich mit einer Aufwickelvorrichtung mit vorgehendem Abstand gemeinsam aufgewickelt werden,
**dadurch gekennzeichnet, dass** die Bandstreifen in der Höhenrichtung unmittelbar hinter der Längsteileinrichtung auf ihrem Weg zu der ersten und der zweiten Umlenkrolle separiert werden, indem die erste und die zweite Umlenkrolle in einer senkrecht zur Bandlaufebene orientierten Höhenrichtung beabstandet werden.

11. Verfahren nach Anspruch 10 oder nach dem Oberbegriff des Anspruches 10, **dadurch gekennzeichnet, dass** der erste Bandstreifen über eine verschwenkbare erste Steuerrolle geführt wird, gegen die während des Anwickelprozesses zur Klemmung des Bandanfangs des ersten Bandstreifens eine erste Andrückrolle anstellbar ist bzw. vorübergehend angestellt wird.

12. Verfahren nach Anspruch 10 oder 11, **dadurch gekennzeichnet, dass** der zweite Bandstreifen hinter der zweiten Umlenkrolle über eine dritte Umlenkrolle oder über eine verschwenkbare zweite Steuerrolle geführt ist, wobei gegen die dritte Umlenkrolle oder gegen die zweite Steuerrolle während des Anwickelprozesses zur Klemmung des Bandanfangs des zweiten Bandstreifens eine zweite Andrückrolle anstellbar ist bzw. angestellt wird.

13. Verfahren nach einem der Ansprüche 10 bis 12, **dadurch gekennzeichnet, dass** die Bandstreifen hinter den Steuerrollen einen gemeinsamen Treiber mit zwei gegeneinander anstellbaren Treiberrollen durchlaufen, von denen zumindest eine angetrieben ist.

14. Verfahren nach einem der Ansprüche 10 bis 13, **dadurch gekennzeichnet, dass** die Bandstreifen, insbesondere beim Anwickeln, zwischen der Längsteileinrichtung und den Umlenkrollen und/oder zwischen den Umlenkrollen und der oder den Steuerrollen über Führungseinrichtungen, z. B. Leittische oder Gurtförderer, geführt werden.

15. Verfahren nach einem der Ansprüche 10 bis 14, **dadurch gekennzeichnet, dass** die Bandstreifen um die Umlenkrollen und/oder die Steuerrollen mit Umschlingungswinkeln von weniger als 45°, vorzugsweise weniger als 25°, geführt werden.

16. Verfahren nach einem der Ansprüche 1 bis 15, **dadurch gekennzeichnet, dass** für ein kantengerades Wickeln der beiden Bandstreifen die Lage des einen Bandstreifens durch Positionierung der Aufwickeleinrichtung und die Lage des anderen Bandstreifens durch Verschwenken der Steuerrolleneinrichtung gesteuert oder geregelt wird oder dass für ein kantengerades Wickeln der beiden Bandstreifen die Lage der beiden Bandstreifen durch Verschwenken der beiden Steuerrolleneinrichtungen gesteuert oder geregelt wird.

17. Verfahren nach einem der Ansprüche 10 bis 16, **dadurch gekennzeichnet, dass** die Lage der Drehachse der Steuerrolleneinrichtung oder deren Steuerrolle variabel positionierbar ist.

18. Verfahren zum Anwickeln eines Bandanfangs eines Bandes, insbesondere Metallbandes, mit einer Anlage nach einem der Ansprüche 1 bis 9, **dadurch gekennzeichnet, dass** der Bandanfang zumindest des ersten Bandstreifens beim Anfahren zunächst bei mittig eingestellter Steuerrolleneinrichtung bzw. Steuerrolle bis zumindest zu der ersten Steuerrolleneinrichtung bzw. Steuerrolle vorgefahren wird, dass der erste Bandstreifen dann mit der ersten Andrückrolle an der ersten Steuerrolle geklemmt und anschließend die Steuerrolle verschwenkt und danach der Bandstreifen weitergefahren wird.
